# EUROPÄISCHE PATENTANMELDUNG

(11) **EP 4 344 891 A1**
(43) Veröffentlichungstag der Anmeldung: **03.04.2024**
(21) Anmeldenummer: 22199038.5
(22) Anmeldetag: 30.09.2022
(51) Int. Cl.: B41K 3/62, B41J 11/00, G06K 15/16, G07D 11/10

(54) **VERFAHREN UND ANORDNUNG ZUR CODIERUNG VON WERTMARKEN**

(71) Anmelder: Slim Logistik GmbH & Co. KG, 40237 Düsseldorf (DE)
(72) Erfinder: Görich, Udo, 41379 Brüggen (DE)
(74) Vertreter: Remus, Alvaro Johannes

(57) **Zusammenfassung**

Die Erfindung betrifft ein Verfahren und eine Anordnung zur Codierung von Wertmarken, bei dem mindestens eine zu bedruckende Wertmarke mindestens einer Fördereinrichtung 3 zugeführt wird, mittels der die Wertmarke mindestens einer Druckvorrichtung 6 zugeführt wird, welche mindestens eine Codierung auf eine zu bedruckende Seite der Wertmarke druckt. Erfindungsgemäß wird die Wertmarke vor dem Aufdrucken der Codierung mindestens einer Reinigungsvorrichtung 4 zugeführt wird, in der die Oberfläche der zu bedruckende Seite der Wertmarke gereinigt wird, um eine gute Haftung der Tinte und eine hohe Qualität des aufgedruckten Codes zu gewährleisten.

## Beschreibung

### Gebiet der Erfindung

Die Erfindung betrifft ein Verfahren zur Codierung von Wertmarken, insbesondere zur Herstellung von Postwertzeichen bzw. Markensets mit individuellem Data-Matrixcode, bei dem mindestens eine zu bedruckende Wertmarke mindestens einer Fördereinrichtung zugeführt wird, mittels der die Wertmarke mindestens einer Druckvorrichtung zugeführt wird, welche mindestens eine Codierung auf eine zu bedruckende Seite der Wertmarke druckt. Die Erfindung betrifft ferner eine Anordnung zur Codierung von Wertmarken, insbesondere eine Codierlinie zur Herstellung von Postwertzeichen bzw. Markensets mit individuellem Data-Matrixcode, die mindestens eine Fördereinrichtung zum Bewegen der Wertmarken entlang einer Verarbeitungslinie und mindestens eine Druckvorrichtung zum Drucken mindestens einer Codierung auf eine zu bedruckende Seite einer Wertmarke umfasst.

### Hintergrund der Erfindung

Als Wertmarke oder Wertzeichen bezeichnet man ganz allgemein in Form von Marken (von der Rolle oder am Block) oder beispielsweise plastikgefertigten Chips erhältliche Nachweise über die Zahlung des darauf aufgedruckten Betrages, die zum Erwerb von bestimmten Artikeln wie z. B. Getränken oder Speisen genutzt werden oder auch Eintrittskarten ersetzen können. Wertzeichen kommen in verschiedenen Größen und Farben vor und können aus unterschiedlichen Materialien hergestellt sein. Postwertzeichen sind amtliche Wertzeichen, die zur Verrechnung von Postgebühren in Höhe ihres Nennwertes verwendet werden. Zu den Postwertzeichen zählen u. a. Karten, Umschläge oder Formulare mit Wertzeichenaufdruck, die in der Philatelie als "Ganzsache" bezeichnet werden, und natürlich die Briefmarken. Eine Briefmarke ist die Bestätigung eines postalischen Beförderungsunternehmens über die Zahlung des aufgedruckten Betrages, die eine Beförderung einer damit versehenen Sendung (Brief, Paket etc.) ermöglicht. Briefmarken werden üblicher Weise in mehreren Exemplaren als Briefmarkenbogen ("Nutzen") auf Papier gedruckt, sind meistens rechteckig und selbstklebend oder rückseitig mit einer Gummierung versehen.

Maschinenlesbaren Codes wie beispielsweise Barcodes oder QR-Codes werden im Handel und in der Logistik häufig zur Kennzeichnung von Waren und anderen Gegenständen verwendet. Die Codierung enthält dabei Informationen über die Ware bzw. den Gegenstand (Bezeichnung, Beschaffenheit, Herkunft, Zieladresse, Gewicht, Preis etc.), die durch Auslesen der Codierung mittels einer dafür geeigneten Lesevorrichtung (in der Regel mit angeschlossener elektronischer Datenverarbeitung) einem Nutzer zugänglich gemacht werden können. Beispielsweise werden auf Lebensmittelverpackungen oder Brief- bzw. Paketsendungen häufig Barcodes aufgebracht, um die Lebensmittel zu kennzeichnen bzw. die Beförderung der Brief- oder Paketsendung zu erleichtern. Ein Barcode ist ein Strichcode mit unterschiedlichen Strichstärken und Abständen ("1D-Barcode"), der in Typen mit unterschiedlicher Codierung dargestellt werden kann (z. B. Code 128, Interleaved 2 aus 5 etc.).

Für die Frankierung von Brief- und Paketsendungen werden vermehrt zweidimensionale Codes ("2D-Codes) oder auch Matrixcodes eingesetzt. Die Deutsche Post setzt beispielsweise bereits seit 2001 bei der Frankierung von Briefsendungen sogenannte digitale Frankiervermerke, also Frankiervermerke mit lesbaren Angaben, kombiniert mit einem Matrixcode ein. Zukünftig sollen nahezu alle Frankiervermerke der Deutschen Post einen Matrixcode umfassen. Die Deutsche Post nutzt dabei auch sogenannte "Data-Matrixcodes", abhängig von der jeweiligen Frankierart in unterschiedlichen Größen und Formen.

"Data-Matrixcodes" sind 2D-Codes, die zunehmend als gedruckte Codierung im Dokumentenhandling (z. B. Tickets oder DV-Freimachung beim Postversand) verwendet werden. Bei Data-Matrixcodes sind die Informationen sehr kompakt in einer quadratischen oder rechteckigen Fläche als Muster von Punkten kodiert, wobei beim Lesen der Codierung die Anordnung der gleich großen Punkte innerhalb der Ränder (Suchmuster) und im Raster der Matrix bestimmt wird. Die Punkte sind schwarze oder weiße Kästchen, die aneinander anschließen, oder runde Punkte mit Lücken dazwischen. Der Data-Matrixcode existiert in Kombination mit einem Verfahren zur Fehlererkennung, das einen CRC-Algorithmus nutzt.

Aufgrund der erforderlichen Genauigkeit gestaltet sich die industrielle Fertigung von Wertzeichen mit aufgedruckter Codierung, insbesondere komplexen Codes wie dem Data-Matrixcode, als sehr schwieriger und aufwändiger Prozess, bei dem eine 100%ige Genauigkeit und einer 0-Fehler-Ausbringung in Einklang gebracht werden muss. Der gesamte Prozess muss so genau und zuverlässig gestaltet werden, dass die Sicherheit gewährleistet ist und die Ausschussmenge, d. h. die Anzahl der nicht lesbaren Codes, so gering wie möglich gehalten wird.

### Zusammenfassung der Erfindung

Es ist Aufgabe der Erfindung, ein Verfahren und eine Anordnung zur industriellen Codierung von Wertmarken mit einer zumindest annähernd 100%igen Genauigkeit und einer zumindest annähernd fehlerfreien Ausbringung zur Verfügung zu stellen.

Erfindungsgemäß wird die Aufgabe durch ein Verfahren der eingangs genannten Art gelöst, bei dem die Wertmarke vor dem Aufdrucken der Codierung mindestens einer Reinigungsvorrichtung zugeführt wird, in der die Oberfläche der zu bedruckende Seite der Wertmarke gereinigt wird. Die zu bedruckenden Oberflächen der Wertmarken sind häufig mit Staub oder Puder verunreinigt, was das Bedrucken dieser Oberflächen erschwert bzw. zu einem unbefriedigenden Druckergebnis führen kann. Die erfindungsgemäße Lösung gewährleistet in vorteilhafter Weise einerseits eine gute Haftung der Tinte und vermeidet andererseits, dass beispielsweise durch Puder die Qualität des Codes negativ beeinflusst wird. Auf diese Weise können codierte Wertmarken schnell, sicher und zuverlässig in einer industriellen Fertigung mit einer zumindest annähernd 100%igen Genauigkeit und einer zumindest annähernd fehlerfreien Ausbringung (sehr geringe Anzahl nicht lesbarer Codes) in großen Mengen hergestellt werden. Die gesamte Fertigung kann dabei beispielsweise mittels eines Bogenoffsetdruck-Verfahrens mit einer entsprechend angepassten Verarbeitungslinie durchgeführt werden.

In vorteilhafter Ausgestaltung der Erfindung ist vorgesehen, dass die Reinigung der Wertmarke das Entfernen von Puder von der zu bedruckenden Seite mittels mindestens einer Bürstenvorrichtung umfasst, so dass eine sichere und vollständige Reinigung der zu bedruckenden Oberfläche der Wertmarke gewährleistet ist. Die Bürstenvorrichtung ist vorzugsweise eine rotierende Bürstenvorrichtung. Dabei ist es besonders vorteilhaft, wenn die Bürstenvorrichtung vor der Reinigung der Wertmarke mit einem antistatischen Mittel behandelt wird, da durch diese Maßnahme ein elektrostatisches Aufladen der beteiligten Oberflächen, das den weiteren Verarbeitungsprozess stören würde, verhindert wird.

Um ein vollständiges Entfernen des Puders aus der Verarbeitungslinie sicherzustellen, ist in vorteilhafter Ausgestaltung der Erfindung ferner vorgesehen, dass der Puder nach dem Entfernen von der zu bedruckenden Seite abgesaugt wird.

In weiterer vorteilhafter Ausgestaltung der Erfindung ist vorgesehen, dass die aufgedruckte Codierung mittels mindestens einer Kontrolleinrichtung auf Qualität und Lesbarkeit geprüft wird. Durch diese Maßnahme wird gewährleistet, dass die bedruckten Wertmarken mit einer praktisch fehlerfreien Ausbringung hergestellt werden können. Zu diesem Zweck ist in vorteilhafter Ausgestaltung der Erfindung auch vorgesehen, dass Wertmarken, die keine, eine doppelte und/oder eine fehlerhafte Codierung aufweisen, mittels mindestens einer Weiche der Fördereinrichtung ausgeschleust werden, wobei die jeweiligen Daten der einer ausgeschleusten Wertmarke zugeordneten Codierung in mindestens einer Fehlerdatei gespeichert werden.

Vorzugsweise umfasst die Codierung mindestens einen Data-Matrixcode, da bei solchen Codes das Lesen des Bildes und das Dekodieren der Information aufgrund der einheitliche Symbolgröße und des festen Symbolabstands deutlich sicherer und die Ausdehnung des Codes erheblich kompakter ist als bei anderen Codes.

Die zu bedruckende Wertmarke kann in vorteilhafter Ausgestaltung der Erfindung Teil eines Bogens sein, der eine Mehrzahl von zu bedruckenden Wertmarken umfasst, vorzugsweise zwei Sätze mit jeweils 10 Wertmarken ("Doppelnutzen"), so dass die Wertmarken in hoher Stückzahl in industrieller Fertigung hergestellt und in einer für die spätere Verwendung geeigneten Form ausgebracht werden können.

Die Aufgabe wird erfindungsgemäß ferner durch eine Anordnung ("Verarbeitungslinie") der eingangs genannten Art gelöst, bei der (in Verarbeitungsrichtung) vor der Druckvorrichtung mindestens eine Reinigungsvorrichtung zum Reinigen der Oberfläche der zu bedruckende Seite der Wertmarke angeordnet ist. Das Reinigen der zu bedruckenden Oberflächen mittels einer geeigneten Reinigungsvorrichtung gewährleistet in vorteilhafter Weise einerseits eine gute Haftung der Tinte und vermeidet andererseits, dass beispielsweise durch Puder die Qualität des aufgedruckten Codes negativ beeinflusst wird. Mittels der erfindungsgemäßen Anordnung können codierte Wertmarken schnell, sicher und zuverlässig in einer industriellen Fertigung mit einer zumindest annähernd 100%igen Genauigkeit und einer zumindest annähernd fehlerfreien Ausbringung (sehr geringe Anzahl nicht lesbarer Codes) in großen Mengen hergestellt werden. Die erfindungsgemäße Anordnung bzw. Verarbeitungslinie umfasst zu diesem Zweck geeignete Komponenten für die schnelle und zuverlässige Durchführung der gesamten industriellen Fertigung, beispielsweise im Bogenoffsetdruck.

In vorteilhafter Ausgestaltung der Erfindung ist dabei vorgesehen, dass die Reinigungsvorrichtung mindestens eine Bürstenvorrichtung, vorzugsweise eine rotierende Bürstenvorrichtung, zur sicheren und vollständigen Reinigung der zu bedruckenden Oberfläche der Wertmarke umfasst. Die Reinigungsvorrichtung kann in weiterer vorteilhafter Ausgestaltung der Erfindung ferner mindestens eine Absaugvorrichtung umfassen, um ein vollständiges Entfernen von Staub und Puder aus der Verarbeitungslinie sicherzustellen.

In weiterer vorteilhafter Ausgestaltung der Erfindung ist ferner vorgesehen, dass (in Verarbeitungsrichtung) hinter der Druckvorrichtung mindestens eine Kontrolleinrichtung angeordnet ist. Die Kontrolleinrichtung umfasst in vorteilhafter Ausgestaltung der Erfindung mindestens eine Kamera, vorzugsweise eine Zeilenkamera. Mittels der Kontrolleinrichtung können die aufgedruckten Codes auf Qualität und Lesbarkeit geprüft werden, so dass gewährleistet ist, dass die bedruckten Wertmarken mit einer praktisch fehlerfreien Ausbringung hergestellt werden können.

In vorteilhafter Ausgestaltung der Erfindung ist ferner vorgesehen, dass die Fördereinrichtung (in Verarbeitungsrichtung) hinter der Kontrolleinrichtung mindestens eine Weiche umfasst, so dass Wertmarken, die keine, eine doppelte und/oder eine fehlerhafte Codierung aufweisen, aus der Verarbeitungslinie ausgeschleust werden können.

Vorteilhafte und bevorzugte Ausführungsbeispiele der Erfindung sind in den Abbildungen dargestellt und werden im Folgenden näher beschrieben.

### Kurze Beschreibung der Abbildung

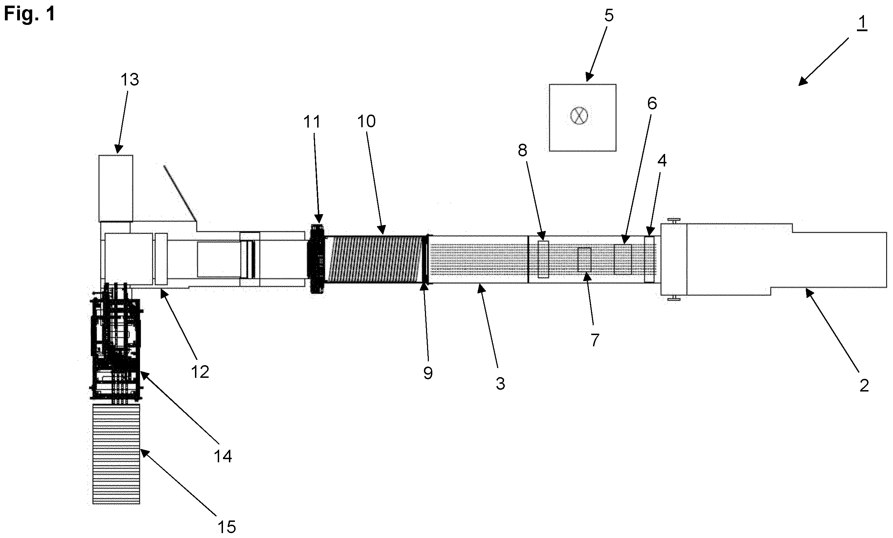

**Figur 1** zeigt eine schematische Darstellung einer beispielhaften Ausführungsform einer erfindungsgemäßen Anordnung ("Verarbeitungslinie").

### Beschreibung der vorteilhaften und bevorzugten Ausführungsbeispiele der Erfindung

**Figur 1** zeigt eine erfindungsgemäße Anordnung 1 in Form einer Verarbeitungslinie, die den Codierungsprozess, das Prüfen auf Lesbarkeit der Codes und das Verpacken der Bogen mittels einer Banderole in einem Herstellungsprozess vereint. Die hier dargestellte beispielhafte erfindungsgemäße Anordnung 1 umfasst die folgenden Komponenten:
Einen Rundstapelanleger 2, der einen kontinuierlichen Bogenlauf gewährleistet, legt die zu bedruckenden Bogen zu zwei Sets a 10 Marken (Doppelnutzen) geschuppt auf. Durch eine Kugelleiste werden die Doppelnutzen ausgerichtet und der integrierten Messerwellenstation (hier nicht sichtbar) übergeben. Die Messerwellenstation übergibt das Produkt an eine Fördereinrichtung 3, z. B. ein Vakuum-Ink-Jet-Band, auf dem die Doppelnutzen fixiert und mit einer Geschwindigkeit von beispielsweise 50-60m/min. transportiert werden. Eine Reinigungsvorrichtung 4 ist in Verarbeitungsrichtung hinter dem Rundstapelanleger 2 angeordnet. Die Reinigungsvorrichtung 4 umfasst eine Bürstenvorrichtung (hier nicht dargestellt), vorzugsweise eine rotierende Bürstenvorrichtung, die mit einer Antistatik-Flüssigkeit besprüht wird, um eine elektrostatische Aufladung der beteiligten Oberflächen zu vermeiden. Mittels der Bürstenvorrichtung werden die zu bedruckenden Bogen bzw. die Wertseite des Doppelnutzens von Verunreinigungen, wie z. B. Staub und/der Puder, befreit. Dieser Arbeitsschritt ist besonders wichtig, um einerseits eine gute Haftung der Tinte zu gewährleisten und andererseits um zu vermeiden, dass durch den Staub bzw. Puder die Qualität des Codes (z.B. Data-Matrixcodes) negativ beeinflusst wird. Der Puder bzw. Staub wird dabei mit einer Absaugvorrichtung (hier nicht dargestellt), beispielsweise einem Hochleistungssauger, abgesaugt. Der abgesaugte Staub bzw. Puder wird über eine Filtereinrichtung 5 abgetrennt, so dass er entsorgt werden kann.

Der fixierte und gereinigte Doppelnutzen wird mit einer Geschwindigkeit von beispielsweise 50-60m/min. unter einer Druckvorrichtung 6, beispielsweise einem UV-Ink-Jet-Drucksystem, durchgeführt, wobei die Bogenkante den Druckprozess steuert. Auf jeden Doppelnutzen werden 20 Codes (z. B. Data-Matrixcodes) passgenau eingedruckt. Der bedruckte Doppelnutzen wird anschließend mittels einer Trocknungsvorrichtung 7, beispielsweise mit Hilfe von Luft und/oder Wärme oder vorzugsweise mindestens einer UV-Lampe, getrocknet. Die Codes werden dann mittels einer Kontrolleinrichtung 8, die vorzugsweise eine Zeilenkamera umfasst, auf Qualität und Lesbarkeit geprüft. Der Controller der Kontrolleinrichtung 8 bereitet die Codes entsprechend vorgegebener Bedingungen auf und erzeugt eine Datei, durch die die Codes mittels der Druckvorrichtung 6 entsprechend auf die Nutzen gedruckt werden. Gleichzeitig kommuniziert der Controller der Kontrolleinrichtung 8 mit dem Controller der Druckvorrichtung 6 und überprüft auf Doublettenbogen, doppelte Codes und fehlende Codes. Jeder Nutzen bzw. Bogen der einen Mangel hat, wird mittels einer Weiche 9 ausgeschleust und die entsprechenden Codes werden in eine Fehlerdatei geschrieben.

Nach der Weiche 9 werden alle für gut befundenen Bogen durch eine Kugelleiste 10 neu ausgerichtet. In einer Schneideinrichtung 11, beispielsweise einer Messerwellenstation mit Trenn- oder Streifenausschnitt, werden die Bogen durch z. B. zwei Kreismesser getrennt und in eine Verpackungsanlage 12 geführt, beispielsweise eine Stapelauslage mit Deckkartenspender. An die Verpackungsanlage 12 ist eine Notauslage 13 angeschlossen, welche die Nutzen im Falle eines Rückstaus geordnet bereithält. Die Verpackungsanlage 12 spendet eine Schutzpappe auf und banderoliert die zwei Markensets zu je 50 Bogen mit einer längs angeordneten Papierbanderole. Die jeweils zwei Pakete werden in der Verpackungsanlage 12 gedreht und an einen Banderolierer 14 (z.B. Kreuzbanderolierer) übergeben. Dieser banderoliert die Pakete nun mit einer Querbanderole. Anschließend werden die Pakete mittels einer Waage 15 zur Produktkontrolle gewogen. Die kreuzbanderolierten Pakete werden abschließend etikettiert und in Kartons verpackt.

## Patentansprüche

1. Verfahren zur Codierung von Wertmarken, bei dem mindestens eine zu bedruckende Wertmarke mindestens einer Fördereinrichtung (3) zugeführt wird, mittels der die Wertmarke mindestens einer Druckvorrichtung (6) zugeführt wird, welche mindestens eine Codierung auf eine zu bedruckende Seite der Wertmarke druckt, **dadurch gekennzeichnet, dass** die Wertmarke vor dem Aufdrucken der Codierung mindestens einer Reinigungsvorrichtung (4) zugeführt wird, in der die Oberfläche der zu bedruckende Seite der Wertmarke gereinigt wird.

2. Verfahren nach Anspruch 1, **dadurch gekennzeichnet, dass** die Reinigung der Wertmarke das Entfernen von Puder von der zu bedruckenden Seite mittels mindestens einer Bürstenvorrichtung, vorzugsweise einer rotierenden Bürstenvorrichtung, umfasst.

3. Verfahren nach Anspruch 2, **dadurch gekennzeichnet, dass** die Bürstenvorrichtung vor der Reinigung der Wertmarke mit einem antistatischen Mittel behandelt wird.

4. Verfahren Anspruch 2 oder 3, **dadurch gekennzeichnet, dass** der Puder nach dem Entfernen von der zu bedruckenden Seite abgesaugt wird.

5. Verfahren nach einem der Ansprüche 1 bis 4, **dadurch gekennzeichnet, dass** die aufgedruckte Codierung mittels mindestens einer Kontrolleinrichtung (8) auf Qualität und Lesbarkeit geprüft wird.

6. Verfahren nach einem der Ansprüche 1 bis 5, **dadurch gekennzeichnet, dass** Wertmarken, die keine, eine doppelte und/oder eine fehlerhafte Codierung aufweisen, mittels mindestens einer Weiche der Fördereinrichtung (3) ausgeschleust werden, wobei die jeweiligen Daten der einer ausgeschleusten Wertmarke zugeordneten Codierung in mindestens einer Fehlerdatei gespeichert werden.

7. Verfahren nach einem der Ansprüche 1 bis 6, **dadurch gekennzeichnet, dass** die Codierung mindestens einen Data-Matrixcode umfasst.

8. Verfahren nach einem der Ansprüche 1 bis 7, **dadurch gekennzeichnet, dass** die zu bedruckende Wertmarke Teil eines Bogens ist, der eine Mehrzahl von zu bedruckenden Wertmarken umfasst, vorzugsweise zwei Sätze mit jeweils 10 Wertmarken.

9. Anordnung (1) zum Codieren von Wertmarken, die mindestens eine Fördereinrichtung (3) zum Bewegen der Wertmarken entlang einer Verarbeitungslinie und mindestens eine Druckvorrichtung (6) zum Drucken mindestens einer Codierung auf eine zu bedruckende Seite einer Wertmarke umfasst, **dadurch gekennzeichnet, dass** vor der Druckvorrichtung (6) mindestens eine Reinigungsvorrichtung (4) zum Reinigen der Oberfläche der zu bedruckende Seite der Wertmarke angeordnet ist.

10. Anordnung nach Anspruch 9, **dadurch gekennzeichnet, dass** die Reinigungsvorrichtung (4) mindestens eine Bürstenvorrichtung, vorzugsweise eine rotierende Bürstenvorrichtung, umfasst.

11. Anordnung nach Anspruch 9 oder 10, **dadurch gekennzeichnet, dass** die Reinigungsvorrichtung (4) mindestens eine Absaugvorrichtung umfasst.

12. Anordnung nach einem der Ansprüche 9 bis 11, **dadurch gekennzeichnet, dass** hinter der Druckvorrichtung (6) mindestens eine Kontrolleinrichtung (8) angeordnet ist.

13. Anordnung nach Anspruch 12, **dadurch gekennzeichnet, dass** die Kontrolleinrichtung (8) mindestens eine Kamera umfasst.

14. Anordnung nach einem der Ansprüche 9 bis 13, **dadurch gekennzeichnet, dass** die Fördereinrichtung (3) hinter der Kontrolleinrichtung (8) mindestens eine Weiche (9) umfasst.
